(19) Europäisches Patentamt
European Patent Office
Office européen des brevets

(11) EP 2 261 262 A1

(12) EUROPEAN PATENT APPLICATION
published in accordance with Art. 153(4) EPC

(43) Date of publication:
**15.12.2010 Bulletin 2010/50**

(21) Application number: **09728854.2**

(22) Date of filing: **24.03.2009**

(51) Int Cl.:
***C08B 15/04*** (2006.01) ***C11D 3/22*** (2006.01)
***C11D 3/37*** (2006.01)

(86) International application number:
**PCT/JP2009/055768**

(87) International publication number:
**WO 2009/122953 (08.10.2009 Gazette 2009/41)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **31.03.2008 JP 2008089992**
**31.03.2008 JP 2008089997**

(71) Applicant: **Kao Corporation**
**Chuo-Ku**
**Tokyo 103-8210 (JP)**

(72) Inventors:
- **YOSHIMURA, Tadanori**
**Wakayama-shi**
**Wakayama 640-8580 (JP)**
- **OKUTSU, Munehisa**
**Wakayama-shi**
**Wakayama 640-8580 (JP)**
- **HIROSHIMA, Masafumi**
**Wakayama-shi**
**Wakayama 640-8580 (JP)**

(74) Representative: **HOFFMANN EITLE**
**Patent- und Rechtsanwälte**
**Arabellastraße 4**
**81925 München (DE)**

# (54) METHOD FOR MANUFACTURING POLYURONATE

(57) The present invention relates to (1) a process for producing a water-soluble polyuronic acid salt having a good biodegradability which process includes the step of oxidizing a low-crystalline powdery cellulose having a crystallinity of 30% or less; (2) a polymer builder having a good biodegradability and an excellent detergency for mud stains and including a polyuronic acid salt having a weight-average molecular weight of from 6,000 to 180,000 which is obtained by oxidizing a polysaccharide; and (3) a detergent composition including the polymer builder.

EP 2 261 262 A1

## Description

FIELD OF THE INVENTION

The present invention relates to a process for producing water-soluble polyuronic acid salts having a good biodegradability, polymer builders composed of the polyuronic acid salts, which have a good biodegradability and an excellent detergency, and detergent compositions containing the polymer builders.

BACKGROUND OF THE INVENTION

Water-soluble polymer materials have been used in various application fields because they have excellent functions such as dispersion of particles and stabilization of dispersed particles, aggregation, viscosity modification and adhesion. In particular, various products of polycarboxylic acids have been produced and practically used because they can be frequently produced at low costs.
With the recent increasing concern and interest in environment protection, there is a strong demand for materials having a less burden on the environments. Under such a circumstance, polymer materials which can be produced from regenerative natural materials, etc., have been developed. The polymer materials which are also usable as structural materials can be recovered after used, and can be recycled and reused.
On the contrary, many of the water-soluble polymer materials are difficult to recover after used and, therefore, are required to have a good biodegradability to reduce their burden on the environments. Conventionally, various biodegradable water-soluble polymers have been proposed. As the biodegradable water-soluble polymers, there may be mentioned water-soluble polysaccharides and derivatives thereof. Specific examples of the known biodegradable water-soluble polysaccharides and derivatives thereof include xanthan gum, alginic acid, pectic acid, hyaluronic acid, carboxymethyl cellulose and hydroxyethyl cellulose.
However, upon production of water-soluble natural polysaccharides, there tend to occur the problems such as discharge of a large amount of wastes and high price of the obtained products. In addition, the polysaccharide derivatives tend to be deteriorated in biodegradability as the degree of modification thereof increases, thereby causing such a problem that functions thereof and harmonization with the environments are hardly satisfied at the same time.
Patent Documents 1 and 2 disclose the methods for producing a polyuronic acid in which a primary hydroxyl group bonded to the position C6 of polysaccharides such as starches and regenerated celluloses is selectively converted into a carboxylic acid in the presence of an N-oxyl compound catalyst by adding a metal salt thereto. However, in these methods, when using regenerated celluloses as the polysaccharides, it is required to dissolve the celluloses in a copper/ammonia solution or to subject the derivatives obtained from the celluloses to regeneration treatment. In addition, in the above methods, since the metal salt is used in a large amount, there tends to occur such a problem that a large amount of wastes are discharged. Also, since these methods are conducted via the complicated steps, there is a demand for production methods which can be carried out more efficiently with a less burden on the environments. Meanwhile, in Patent Documents 1 and 2, there are no descriptions concerning a builder for detergents.
On the other hand, it is known for a long time that solid stains or smears such as mud stains on clothes are hardly cleaned. In particular, with the recent progress of water-saving techniques in washing machines, it has been further demanded to solve the above problem concerning the solid stains or smears.
In order to enhance a detergency of detergents for clothes containing a surfactant as a main constituent, a builder for capturing a calcium component in water is compounded therein. As the builder, there have been extensively used inorganic builders such as zeolite A. In addition, organic builders are also used to compensate the effects of the inorganic builders.
As the organic builders, polycarboxylic acid-based polymer builders are known. Many of these polymer builders are excellent in dispersion stability under the condition of washing and cleaning solid stains, in particular, hydrophilic particles such as mud stains, and exhibit a large effect of cleaning the mud stains. However, many of these conventional polymer builders tend to have a poor biodegradability. Therefore, in recent years, from the viewpoint of environmental safety, there is a strong demand for development of polymers having a good detergency, in particular, against mud stains, and an improved biodegradability which can be substituted for the above conventional polymer builders.
Patent Document 3 discloses a liquid detergent composition containing an alkali metal salt of a high-molecular weight alginic acid extracted from natural substances as a builder.
Patent Document 4 discloses a detergent composition having a good environmental suitability which contains a glycoside of uronic acid as a surfactant.
Patent Document 5 discloses a process for producing a low-molecular weight polyuronic acid having an average polymerization degree of less than 20 by subjecting a solution of a high-molecular weight polyuronic acid to oxidative cleavage. Patent Document 5 suggests application of the polyuronic acid to a builder for detergents, but fails to specifically describe such an application.

Patent Document 6 discloses a process for producing a polysaccharide derivative having a weight-average molecular weight of 200,000 or more and preferably 500,000 or more in which polysaccharides such as celluloses are oxidized by a hypochlorite in the presence of a nitroxyl compound. Patent Document 6 suggests application of the polysaccharide derivative to a builder for detergents, but fails to specifically describe such an application.

Patent Document 1: JP-A 2004-189924
Patent Document 2: JP-A 2006-124598
Patent Document 3: JP-A 62-104900
Patent Document 4: JP-A 9-503517
Patent Document 5: JP-A 2002-47302
Patent Document 6: JP-A 2002-226502

SUMMARY OF THE INVENTION

The present invention relates to the following aspects (1) to (3).

(1) A process for producing a polyuronic acid salt, including the step of oxidizing a low-crystalline powdery cellulose having a crystallinity of 30% or less.
(2) A polymer builder including a polyuronic acid salt having a weight-average molecular weight of from 6,000 to 180,000 which is obtained by oxidizing a polysaccharide.
(3) A detergent composition including the polymer builder as defined in the above aspect (2).

DETAILED DESCRIPTION OF THE INVENTION

According to extensive researches made by the present inventors, when a high-molecular weight alginic acid extracted from natural substances is used as a builder for detergents as described in Patent Document 3, there tends to occur such a problem that the resulting detergent is considerably deteriorated in detergency for mud stains so that the mud stains are rather re-attached to clothes as compared to those detergents to which the alginic acid is not added. In addition, it is considered that the low-molecular weight polyuronic acid produced according to Patent Document 5 tends to contain a large amount of impurities such as oxidative cleavage products and monosaccharides and therefore adversely affects a detergency and a biodegradability of the obtained detergent. Under these circumstances, the present invention relates to (1) a process for producing a water-soluble polyuronic acid salt having a good biodegradability in an efficient manner with a less burden on the environments; (2) a polymer builder having not only a good biodegradability but also an excellent detergency for mud stains; and (3) a detergent composition.

The present inventors have found that when using a powdery cellulose having a high reactivity and a reduced crystallinity, it is possible to produce a water-soluble polyuronic acid salt in an efficient manner without solubilizing the cellulose and forming a derivative thereof.
Further, the present inventors have also found that the polyuronic acid salt which is obtained by selectively oxidizing polysaccharides to convert a hydroxyl group into a carboxyl group, and has an adequate weight-average molecular weight, provides a polymer builder capable of exhibiting an excellent detergency for mud stains.
Thus, the present invention relates to the following aspects (1) to (3).

(1) A process for producing a polyuronic acid salt, including the step of oxidizing a low-crystalline powdery cellulose having a crystallinity of 30% or less.
(2) A polymer builder including a polyuronic acid salt having a weight-average molecular weight of from 6,000 to 180,000 which is obtained by oxidizing a polysaccharide.
(3) A detergent composition including the polymer builder as defined in the above aspect (2).

[Production of Low-Crystalline Powdery Cellulose]

It is generally known that celluloses have several crystal structures whose crystallinity is defined by the ratio between an amorphous moiety partially existing therein and a crystalline moiety. The term "crystallinity" as used herein means an I-type crystallinity derived from a crystal structure of natural celluloses, and is defined as the crystallinity represented by the following calculation formula (1) obtained from powder X-ray crystal diffraction spectrum analysis:

$$\text{Crystallinity (\%)} = [(I_{22.6} - I_{18.5}/I_{22.6}] \times 100 \qquad (1)$$

wherein $I_{22.6}$ is a diffraction intensity of a lattice plane (002 plane) as measured at a diffraction angle 2θ of 22.6° in X-ray diffraction analysis; and $I_{18.5}$ is a diffraction intensity of an amorphous moiety as measured at a diffraction angle 2θ of 18.5° in X-ray diffraction analysis.
The term "low-crystalline" of the low-crystalline powdery cellulose as used in the present invention means the condition in which the proportion of the amorphous moiety in a crystal structure of the cellulose is large, and more specifically means the case where the crystallinity calculated from the above calculation formula (1) is 30% or less.
When the crystallinity is 30% or less, the oxidation reaction of the cellulose can proceed very smoothly, so that the aimed water-soluble polyuronic acid salt can be obtained in an efficient manner. From the same viewpoint, the crystallinity of the cellulose is preferably 25% or less, more preferably 20% or less and still more preferably 10% or less. In particular, in the present invention, completely amorphized celluloses having a crystallinity of substantially 0% as calculated from the above calculation formula (1), are most preferably used.
Generally known powdery celluloses contain an amorphous moiety in a very small amount, and the crystallinity thereof as calculated from the above calculation formula (1) generally lies within the range of from about 60 to about 80%. These celluloses are classified into so-called crystalline celluloses and exhibit a low reactivity for oxidation reactions including synthesis of the polyuronic acid salt according to the present invention.

The low-crystalline powdery cellulose used in the production process according to the present invention has a crystallinity of 30% or less. The method for producing the low-crystalline powdery cellulose is not particularly limited. The low-crystalline powdery cellulose is preferably produced by the method in which a cellulose-containing raw material is subjected to mechanochemical treatment using a mill. The cellulose-containing raw material is preferably a material treated by an extruder. The low-crystalline powdery cellulose may be produced, for example, by the method in which chip-like pulps obtained by coarsely milling sheet-like pulps are treated by an extruder.

(Extruder)

As the extruder used in the above method, there may be mentioned a single-screw extruder and a twin-screw extruder. Among these extruders, the twin-screw extruder is preferably used. From the viewpoint of applying a strong compression shear force to the chip-like pulps, etc., the extruder is preferably provided with a so-called kneading disk section in any portion of the respective screws thereof.
The kneading disk section is constituted from a plurality of kneading disks which are continuously arranged in combination with each other while offsetting their positions at constant phase intervals. For example, 3 to 20 kneading disks, preferably 6 to 16 kneading disks, are arranged in combination with each other while offsetting their positions at phase intervals of 90°. The kneading disk section is capable of continuously treating the chip-like pulps, etc., while applying an extremely strong shear force to the chip-like pulps, etc., with rotation of the screws by forcibly passing them through a narrow gap between the kneading disks. The shear rate used upon the treatment by the extruder is preferably from 600 to 3000 $sec^{-1}$ and more preferably from 6000 to 2000 $sec^{-1}$.
The treating method using the extruder is not particularly limited, and is preferably such a method in which the chip-like pulps are charged into the extruder and continuously treated therein.

(Mill)

The mill used in the above method is preferably a media-type mill. The media-type mills are classified into a container driving-type mill and a media stirring-type mill.
Examples of the container driving-type mill include a rolling mill, a vibration mill, a planetary mill and a centrifugal fluid mill. Among these container driving-type mills, from the viewpoints of a good milling efficiency and a good productivity, preferred is the vibration mill.
Examples of the media stirring-type mill include tower-type mills such as a tower mill; agitation tank-type mills such as an attritor, an aquamizer and a sand grinder; flow tank-type mills such as a Visco mill and a pearl mill; flow tube-type mills; annular-type mills such as a co-ball mill; and continuous-type dynamic mills. Among these media stirring-type mills, form the viewpoints of a high milling efficiency and a good productivity, preferred are the agitation tank-type mills. When using the media stirring-type mills, the peripheral speed of agitation blades thereof is preferably from 0.5 to 20 m/s and more preferably from 1 to 15 m/s.
The above types of the mills will be understood by referring to "Progress of Chemical Engineering; 30th Collection; Control of Microparticles", The Society of Chemical Engineers. Japan, Tokai Division, October 10, 1996, Maki-Shoten.
The treating method may be either a batch method or a continuous method.

The material of the media used in the mills is not particularly limited. Examples of the material of the media include iron, stainless steel, alumina, zirconia, silicon carbide, silicon nitride and glass.

When using balls as the media for the mill, the outer diameter of the balls is preferably from 0.1 to 100 mm and more preferably from 0.5 to 50 mm. When the size of the balls lies within the above specified range, a desired milling force can be attained, and the cellulose can be efficiently amorphized without contamination of the cellulose-containing raw material owing to inclusion of fragments of the balls thereinto.

As the media for the mill, there may be used not only the balls, but also rods or tubes.

The filling ratio of the media such as balls in the mill varies depending upon the kind of the mill used, and is preferably from 10 to 97% and more preferably from 15 to 95%. When the filling ratio of the media such as balls lies within the above specified range, the frequency of contact between the cellulose-containing raw material and the balls, etc., can be increased, and the milling efficiency can be enhanced without inhibiting a motion of the media. The "filling ratio" as used herein means a ratio of an apparent volume of the media to a volume of an agitation portion of the mill.

The treating time upon milling the material in the mill varies depending upon kind of the mil used as well as kind, size and filling ratio of the media such as balls and, therefore, is not particularly determined. From the viewpoint of reducing the crystallinity of the cellulose, the treating time is preferably from 3 min to 72 h, more preferably from 3 min to 50 h, still more preferably from 5 min to 30 h, further still more preferably from 10 min to 20 h and especially preferably from 10 min to 10 h. The treating temperature in the mill is also not particularly limited, and is preferably from 5 to 250°C, more preferably from 5 to 200°C and still more preferably from 10 to 200°C from the viewpoint of preventing heat deterioration.

According to the above method, it is also possible to control a molecular weight of the resulting cellulose. More specifically, by using the above method, it is also possible to readily produce a powdery cellulose having a high polymerization degree and a low crystallinity which is, in general, hardly available. The polymerization degree of the low-crystalline powdery cellulose is preferably from 10 to 2000 and more preferably from 20 to 1000.

The average particle size of the low-crystalline powdery cellulose is not particularly limited as long as a good fluidity of the powdery cellulose can be ensured. From the viewpoint of allowing the oxidation reaction to proceed smoothly in a slurry state, the average particle size of the low-crystalline powdery cellulose is preferably 300 μm or less, more preferably 150 μm or less and still more preferably 50 μm or less. However, from the viewpoint of easiness in handling upon industrial practice, the average particle size of the low-crystalline powdery cellulose is preferably 20 μm or more, and more preferably 25 μm or more.

[Production of Polyuronic Acid Salt]

In the present invention, the polyuronic acid salt can be produced by dispersing or dissolving the polysaccharides such as the above obtained low-crystalline powdery cellulose in a solvent and then subjecting the resulting dispersion or solution to oxidation reaction in the presence of a catalyst.

(Polysaccharides)

The polysaccharides used as the raw material in the present invention are not particularly limited. Examples of the polysaccharides include α-bond type polysaccharides such as starches, amylose, amylopectin, pectin, protopectin, pectic acid and pullulan as well as derivatives thereof, and β-bond type polysaccharides such as celluloses and guar gum as well as derivatives thereof.

From the viewpoints of good reactivity and good availability, among these α-bond type polysaccharides, preferred are starches and constituents thereof such as amylose, amylopectin and pullulan. Examples of the starches include corn starch, tapioca starch, potato starch, wheat starch, sweet potato starch, rice starch and waxy maize starch. Among these polysaccharides, preferred are those containing a large number of primary hydroxyl groups bonded to the position C6 of a glucopyranose unit thereof such as starches, amylose, amylopectin and pullulan.

Among the above β-bond type polysaccharides, preferred are celluloses and guar gum. Although high-crystalline pulps may be used as the raw celluloses material, the oxidation reaction of crystalline moieties thereof tends to hardly proceed, so that a small amount of water-insoluble components tend to be produced. For this reason, as the celluloses, there are preferably used amorphized powdery celluloses which are reduced in crystallinity by subjecting celluloses to mercerization treatment, regeneration treatment (by cupro-ammonia method, viscose method, etc.) or mechanochemical treatment, etc.

The low-crystalline powdery cellulose can be very simply produced from sheet-like or roll-like pulps having a high cellulose purity as generally available raw materials. The method for producing the low-crystalline powdery cellulose is not particularly limited, and may include, for example, the production methods described in JP-A 62-236801, JP-A 2003-64184, JP-A 2004-331918, etc. Among the above celluloses, the low-crystalline powdery celluloses obtained by the above mechanochemical treatment, etc., are more preferred.

(Polyuronic Acid Salt)

The polyuronic acid salt is in the form of a polymer obtained by polymerizing an alkali metal salt of a uronic acid such as glucuronic acid and galacturonic acid through a glucoside bond. A typical structure of the polyuronic acid salt is represented by the following structural formula (1). The polyuronic acid salt of the structural formula (1) in which X is hydrogen or sodium has a solubility in distilled water at 25°C of 10% or more.
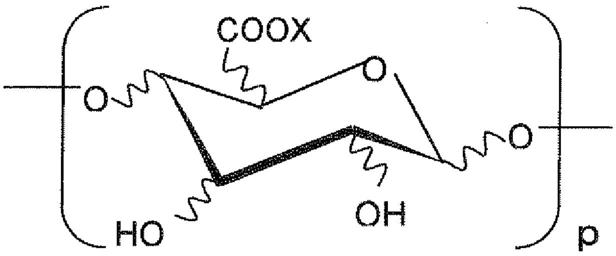
(1)

wherein X is hydrogen or an alkali metal; p is a polymerization degree.
Specific typical examples of the polyuronic acid salt include (i) a polymer containing one or more uronic acid salt units selected from the group consisting of those represented by the following structural formulae (2) to (4) which are linked with each other; and (ii) a polymer containing, in addition to the uronic acid salt units, one or more sugar units selected from the group consisting of those represented by the following structural formulae (5) to (8), such as glucose and galactose, which are linked with the uronic acid salt units through a glycoside bond.
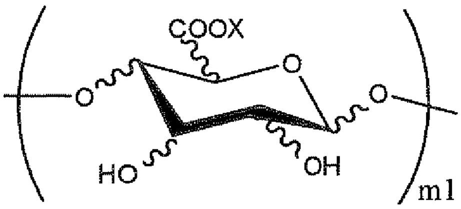
(2)

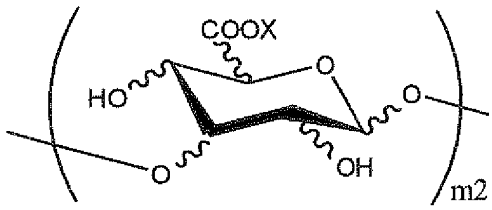
(3)

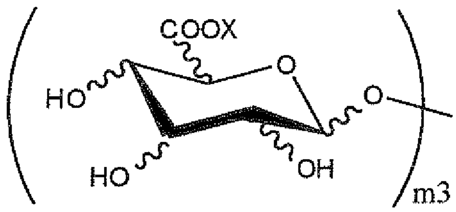
(4)

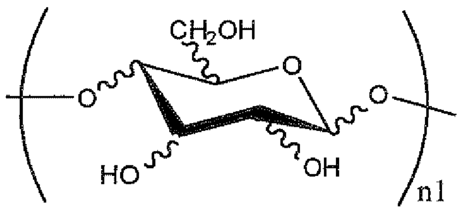

(5)

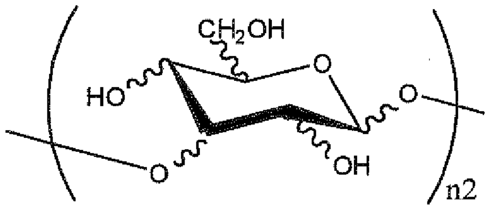

(6)

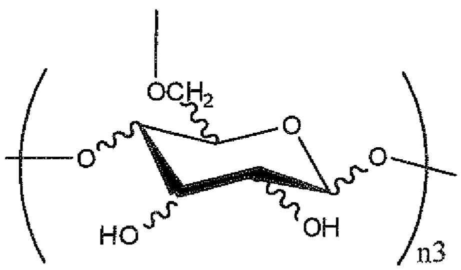

(7)

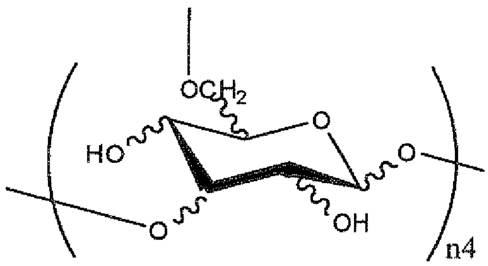

(8)

In the above formulae, X is hydrogen or an alkali metal. When X in each of the above formulae is hydrogen or sodium, the polyuronic acid salt represented by the structural formula (1) has a solubility in distilled water at 25°C of 10% or more.

In the structural formulae (2) to (4), m1, m2 and m3 represent molar fractions of the respective uronic acid units in the polyuronic acid salt, and a sum of m1, m2 and m3 is preferably from 70 to 100, more preferably from 75 to 100 and still more preferably from 85 to 100. The sum of the molar fractions m1 to m3 has the same meaning as the oxidation degree of the polyuronic acid salt.

In the structural formulae (5) to (8), n1, n2, n3 and n4 represent molar fractions of the respective sugar units in the polyuronic acid salt, and a sum of n1, n2, n3 and n4 is preferably from 30 to 0, more preferably from 25 to 0 and still more preferably from 15 to 0.

From the above viewpoints, the ratio of the sum (m) of the molar fractions m1 to m3 of the uronic acid salt units to the sum (n) of the molar fractions n1 to n4 of the sugar units (m/n) is preferably 70 to 100/30 to 0, more preferably 75 to 100/25 to 0 and still more preferably 85 to 100/15 to 0.

In the present invention, when the polyuronic acid salt is produced by dispersing the low-crystalline powdery cellulose having a crystallinity of 30% or less in a solvent and then subjecting the resulting dispersion to oxidation reaction in the presence of a catalyst, such a polyuronic acid salt is typically represented by the following structural formula (9).

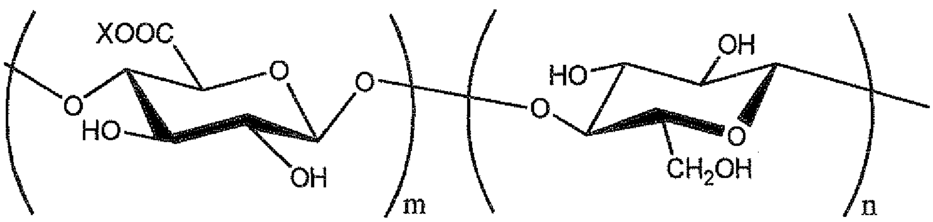

(9)

wherein X is the same as defined above.

In the structural formula (9), the molar fraction (m) of the uronic acid salt units in the polyuronic acid salt is preferably from 70 to 100, more preferably from 75 to 100 and still more preferably from 85 to 100. The molar fraction (m) has the same meaning as an oxidation degree of the polyuronic acid salt.

In the structural formula (9), the molar fraction (n) of the sugar units in the polyuronic acid salt is preferably from 30 to

0, more preferably from 25 to 0 and still more preferably from 15 to 0.
From the above viewpoints, in the structural formula (9),the ratio of the molar fraction (m) of the uronic acid salt units to the molar fraction (n) of the sugar units (m/n) is preferably 70 to 100/30 to 0, more preferably 75 to 100/25 to 0 and still more preferably 85 to 100/15 to 0.

The polyuronic acid salt can be produced by dispersing the polysaccharides in a solvent and then subjecting the resulting dispersion to oxidation reaction in the presence of a catalyst and, if required, a co-oxidizer and a co-catalyst. In the oxidation reaction, a primary hydroxyl group in a monosaccharide unit as a constitutional component of the polysaccharides, for example, the primary hydroxyl group at the position C6 of a glucopyranose unit therein, is selectively oxidized to produce a carboxyl group.
Examples of the selective oxidation reaction of the primary hydroxyl group include an oxidation reaction by oxygen using a platinum catalyst, an oxidation reaction by a nitrogen compound, an oxidation reaction by nitric acid, and an oxidation reaction by an N-oxyl compound. Among these oxidation reactions, the oxidation reaction that is carried out in the presence of the N-oxyl compound as a catalyst and, if required, a co-oxidizer and a co-catalyst is preferred from the viewpoints of a high selectivity and uniformity of the reaction as well as smooth proceeding of the oxidation reaction under moderate conditions.

(N-Oxyl Compound)

The N-oxyl compound is in the form of an N-oxide of a hindered amine, in particular, an N-oxide of a hindered amine having a bulky group at the $\alpha$-position of an amino group thereof. Examples of the N-oxyl compound include di-tert-alkyl nitroxyl compounds such as 2,2,6,6-tetraalkyl piperidine-1-oxyl, 4-hydroxy-2,2,6,6-tetraalkyl piperidine-1-oxyl and 4-alkoxy-2,2,6,6-tetraalkyl piperidme-1-oxyl. Among these N-oxyl compounds, preferred are 2,2,6,6-tetramethyl piperidine-1-oxyl (TEMPO), 4-hydroxy-2,2,6,6-tetramethyl piperidine-1-oxyl and 4-methoxy-2,2,6,6-tetramethyl piperidine-1-oxyl, and more preferred is 2,2,6,6-tetramethyl piperidine-1-oxyl (TEMPO).
Meanwhile, in the oxidation reaction using TEMPO as the N-oxyl compound, it is considered that an oxoammonium moiety as an oxidation active species of a nitroxy radical acts as an oxidizing agent.
The N-oxyl compound may be present in a catalytic amount in the reaction system, and is used in an amount of preferably from 0.001 to 5% by mass, more preferably from 0.1 to 4% by mass and still more preferably from 0.5 to 3% by mass on the basis of the low-crystalline powdery cellulose.

(Co-oxidizer and Co-catalyst)

Examples of the co-oxidizer include oxygen or air; peroxides; halogens; hypohalous acids, halous acids, perhalogen acids or salts thereof; halogen oxides; and nitrogen oxides.
Examples of the co-catalyst include bromides such as sodium bromide and potassium bromide; and iodides such as sodium iodide and potassium iodide.
The co-oxidizer and the co-catalyst may be respectively used in an effective amount capable of exhibiting their functions, without any particular limitation.

(Conditions of Oxidation Reaction)

The temperature used in the oxidation reaction is preferably 50°C or lower, more preferably 40°C or lower and still more preferably 20°C or lower from the viewpoints of a good selectivity of the reaction and less occurrence of side reactions. The lower limit of the oxidation reaction temperature is preferably -5°C or higher.
The pH value of the reaction system is preferably determined according to properties of the co-oxidizer used. For example, when using sodium hypochlorite as the co-oxidizer, the pH value of the reaction system is preferably adjusted to that of an alkali side.
In the present invention, the oxidation reaction is preferably carried out by dispersing the low-crystalline powdery cellulose in a solvent. Examples of the solvent include water; alcohols such as methanol and ethanol; ketones such as acetone and methyl ethyl ketone; N,N-dimethyl formamide; and dimethyl sulfoxide. Among these solvents, water is preferred from the viewpoint of reduction in burden on the environments. These solvents may be used alone or in the form of a mixture of any two or more thereof.
In the production of the polyuronic acid salt, the residual N-oxyl compound such as TEMPO used as the catalyst, or the like, tends to be present or salts tend to be by-produced. For this reason, in order to obtain the polyuronic acid salt having a high purity, the obtained reaction product is preferably subjected to purification treatments such as re-precipitation in methanol, ethanol, acetone, etc., extraction of the residual N-oxyl compound in a water-insoluble solvent, and ion exchange or dialysis for removal of the salts. As the purification method, any optimum method may be adopted in view of kind of solvent used in the oxidation reaction, a degree of oxidation of the reaction product and a desired degree of

purification of the reaction product.

The weight-average molecular weight of the polyuronic acid salt obtained by the above method is preferably from 1,000 to 500,000, more preferably from 6,000 to 180,000 and still more preferably from 2,000 to 200,000 from the viewpoint of imparting a good water solubility and a good biodegradability thereto. Meanwhile, the weight-average molecular weight of the polyuronic acid salt may be measured in terms of pullulan by gel permeation chromatography (GPC).

The polyuronic acid salt obtained according to the process of the present invention may be used as a biodegradable water-soluble polymer material in various applications such as dispersants and stabilizers, coagulants, viscosity modifiers, adhesives and film forming agents.

[Polymer Builder]

The polymer builder of the present invention is constituted of a polyuronic acid salt having a weight-average molecular weight of from 6,000 to 180,000 which is produced by selectively oxidizing a primary hydroxyl group in polysaccharides.

A typical structure of the polyuronic acid salt is represented by the above structural formulae. The polyuronic acid salt represented by any of the structural formulae (1) to (4) and (9) in which X is hydrogen or sodium can exhibit a solubility in distilled water at 25°C of 10% or more.

The weight-average molecular weight of the polyuronic acid salt constituting the polymer builder of the present invention is in the range of from 6,000 to 180,000. The weight-average molecular weight of the polyuronic acid salt is measured in terms of pullulan by gel permeation chromatography (GPC). The polymer builder having a weight-average molecular weight of 6,000 or more allows mud particles removed from clothes to be sufficiently dispersed in a washing solution, so that re-attachment of the mud particles to the clothes can be effectively prevented. On the other hand, when the polymer builder has a weight-average molecular weight of 180,000 or less, the polymer builder which is adsorbed on the surface of the respective mud particles, is coupled together between the mud particles, so that formation of aggregated masses of the mud particles can be prevented. The weight-average molecular weight of the polyuronic acid salt is preferably from 7,000 to 150,000, more preferably from 7,500 to 120,000, still more preferably from 8,000 to 100,000 and especially preferably from 8,000 to 90,000.

The degree of oxidation of the polyuronic acid salt is preferably 60 mol% or more, more preferably 70 mol% or more, still more preferably 75 mol% or more, further still more preferably 80 mol% or more, and especially preferably 85 mol% or more. The polyuronic acid salt having an oxidation degree of 60 mol% or more is enhanced in adsorption onto mud particles, so that the resulting detergent can be improved in detergency for mud stains.

The oxidation degree as used herein is defined by the ratio of the number of equivalents of a carboxyl group in a polyuronic acid salt unit to the number of equivalents of a basic compound used for neutralization thereof. More specifically, the oxidation degree of the polyuronic acid salt is determined from an amount of a carboxylic acid per unit weight of the polyuronic acid salt which is measured by a titration method described in Examples below according to the following calculation formula (1).

$$\text{Oxidation Degree (\%)} = [(162.1 \times A)/(1 - 14.0 \times A)] \times 100 \qquad (1)$$

wherein A is an amount (mol/g) of a carboxyl group which is determined by titration.

Examples of the basic compound used for the neutralization include alkali metal hydroxides or alkali earth metal hydroxides such as sodium hydroxide, potassium hydroxide and magnesium hydroxide, ammonia and amine compounds.

The weight-average molecular weight and oxidation degree of the polyuronic acid salt can be appropriately adjusted according to kinds of the polysaccharides used as a raw material, reaction conditions such as amount of the oxidizing agent used, etc., to thereby suitably control a detergency for mud stains of the resulting detergent composition.

[Detergent Composition]

The detergent composition of the present invention contains the polymer builder of the present invention and a surfactant. The content of the polymer builder of the present invention in the detergent composition is preferably from 0.1 to 15% by mass, more preferably from 0.5 to 10% by mass and still more preferably from 1.5 to 10% by mass from the viewpoint of a good detergency. The content of the surfactant in the detergent composition is preferably from 5 to 60% by mass, more preferably from 10 to 40% by mass and still more preferably from 20 to 30% by mass from the viewpoint of a good detergency.

The polymer builder of the present invention may be used alone as a builder for detergents, but may also be used in

combination with an inorganic builder such as zeolite A or the other organic builder.

Examples of the surfactant used together with the polymer builder of the present invention include anionic surfactants, cationic surfactants, nonionic surfactants and amphoteric surfactants.

Specific examples of the suitable anionic surfactants include fatty acid soaps, alkylethercarboxylic acid salts, N-acylamino acid salts, alkylbenzenesulfonic acid salts, alkylnaphthalenesulfonic acid salts, dialkylsulfosuccinic acid ester salts, α-olefinsulfonic acid salts, higher-alcohol sulfuric acid ester salts, alkylethersulfuric acid salts, polyoxyetyhylenealkylphenylethersulfuric acid salts, sulfuric acid ester salts of fatty acid alkylolamides, alkyletherphosphoric acid ester salts and alkylphosphoric acid ester salts.

Specific examples of the suitable cationic surfactants include fatty amine salts, fatty quaternary ammonium salts, benzalkonium salts, benzethonium chloride, pyridinium salts and imidazolium salts.

Specific examples of the suitable nonionic surfactants include polyoxyethylene alkyl ethers, polyoxyethylene alkyl phenyl ethers, polyoxyethylene polyoxypropylene block polymers, polyoxyethylene polyoxypropylene alkyl ethers, polyoxyethylene glycerol fatty acid esters, polyoxyethylene castor oils, polyoxyethylene sorbitan fatty acid esters, polyoxyethylene sorbitol fatty acid esters, polyethylene glycol fatty acid esters, fatty acid monoglycerides, polyglycerol fatty acid esters, sorbitan fatty acid esters, fatty acid alkanol amides, polyoxyethylene fatty acid amides, polyoxyethylene alkyl amines and alkyl amine oxides.

Specific examples of the suitable amphoteric surfactants include carboxybetaine type compounds, aminocarboxylic acid salts and imidazolium betaine.

Upon production of the detergent composition of the present invention, not only the polymer builder of the present invention and the surfactant but also various detergent components used for ordinary detergent compositions can be compounded therein.

Examples of the detergent components usable in the detergent composition of the present invention include bleaching agents (such as percarbonates and perborates), bleaching activators, recontamination inhibitors (such as carboxymethyl cellulose), softening agents, reducing agents (such as sulfites), fluorescent brighteners, foam inhibitors (such as silicones), enzymes such as cellulase and protease, dyes and perfumes.

The detergent composition of the present invention may be used in various applications without any particular limitation, for example, can be suitably used as powdery detergents for clothes, detergents for automatic dish washers, etc.

## EXAMPLES

In the following Production Examples, Examples and Comparative Examples, the term "%" used therein means "% by mass" unless otherwise specified. Meanwhile, measurements of properties of the celluloses and polyuronic acid salt and evaluations of biodegradability thereof were carried out by the following methods.

### <Measurement of Polymerization Degree and Viscosity-Average Molecular Weight of Powdery Cellulose>

The polymerization degree of the powdery cellulose was measured by copper/ammonia method as described in ISO-4312. Further, the viscosity-average molecular weight of the powdery cellulose was determined by multiplying the thus measured polymerization degree by 162 as a molecular weight of glucose.

### <Measurement of Average Particle Size of Powdery Cellulose>

The average particle size of the powdery cellulose was measured using a laser diffraction/scattering-type particle size distribution measuring device "LA-920" available from Horiba Ltd. Upon the measurement, the powdery cellulose was subjected to an ultrasonic treatment for 1 min prior to measuring the particle size thereof, and then by using water as a dispersing medium, a volume-based median diameter of the powdery cellulose was measured at 25°C.

### <Calculation of Crystallinity of Low-Crystalline Cellulose>

The crystallinity of the low-crystalline cellulose was calculated from a diffraction spectrum peak intensity which was measured under the following conditions using a "Rigaku RINT 2500VC X-RAY diffractometer" available from Rigaku Corporation, according to the following calculation formula (2). Measuring Conditions:

X-ray source: Cu/Kα-radiation; tube voltage: 40 kV; tube current: 120 mA; measuring range: diffraction angle 2θ = 5 to 45°; The sample to be measured was prepared by compressing pellets each having an area of 320 $mm^2$ and a thickness of 1 mm; X-ray scanning speed: 10°/min.

$$\text{Crystallinity (\%)} = [(I_{22.6} - I_{18.5})/I_{22.6}] \times 100 \qquad (2)$$

wherein $I_{22.6}$ is a diffraction intensity of a lattice plane (002 plane) as measured at a diffraction angle 2θ of 22.6° in X-ray diffraction analysis; and $I_{18.5}$ is a diffraction intensity of an amorphous moiety as measured at a diffraction angle 2θ of 18.5° in X-ray diffraction analysis.

<Measurement of Molar Fraction of Uronic Acid in Polyuronic Acid Salt>

Fifty grams of a 2% aqueous solution of sodium polyuronate synthesized were prepared, and mixed with 6N hydrochloric acid to adjust a pH value of the aqueous solution to 1 or less. The thus obtained acid solution was charged into 500 mL of ethanol. The resulting precipitate was recovered and washed with ethanol several times. The thus obtained polyuronic acid and carboxymethyl cellulose were accurately weighed in an amount of 0.1 g, and dissolved or dispersed in 30 mL of ion-exchanged water. The resulting solution or dispersion was titrated with a 0.1N sodium hydroxide aqueous solution using phenolphthalein as an indicator to determine an amount of a carboxylic acid per unit weight of the polyuronic acid salt. Further, the uronic acid molar fraction (m in the structural formula (1)) was calculated from the thus determined amount of the carboxylic acid according to the following calculation formula (1).

$$\text{Uronic Acid Molar Fraction (m)} = [(162.1 \times A)/(1 - 14.0 \times A)] \times 100 \qquad (1)$$

wherein A is an amount (mol/g) of a carboxyl acid which was determined by titration.
Also, the molar fraction of glucose which is not involved in an uronic acid (n in the structural formula (1)) was calculated according to the following calculation formula (2).

$$\text{Glucose Molar Fraction (n)} = 100 - m \qquad (2)$$

<Method for Measuring Weight-Average Molecular Weight of Polyuronic Acid Salt>

The weight-average molecular weight of the polyuronic acid salt was measured by gel permeation chromatography (GPC) under the following conditions.
Column: "G4000PWXL + G2500PWXL" available from Tosoh Corporation; Eluent: 0.2M phosphoric acid buffer/acetonitrile (volume ratio: 9/1); Measuring temperature: 40°C; Flow rate: 1.0 mL/min; Detector: UV or RI; Standard polymer: Pullulan

<Measurement of Oxidation Degree of Polyuronic Acid Salt>

Fifty grams of a 2% aqueous solution of sodium polyuronate synthesized were prepared, and mixed with 6N hydrochloric acid to adjust a pH value of the aqueous solution to 1 or less. The thus obtained acid solution was charged into 500 mL of ethanol. The resulting precipitate was recovered and washed with ethanol several times. The thus obtained polyuronic acid and carboxymethyl cellulose were accurately weighed in an amount of 0.1 g, and dissolved or dispersed in 30 mL of ion-exchanged water. The resulting solution or dispersion was titrated with a 0.1N sodium hydroxide aqueous solution using phenolphthalein as an indicator to determine an amount of a carboxylic acid per weight of the polyuronic acid salt unit. Further, the oxidation degree of the polyuronic acid salt was calculated from the thus determined amount of the carboxylic acid according to the following calculation formula (1).

$$\text{Oxidation Degree (\%)} = [(162.1 \times A)/(1 - 14.0 \times A)] \times 100 \qquad (1)$$

wherein A is an amount (mol/g) of a carboxyl acid which was determined by titration.

<Evaluation of Water Solubility of Polyuronic Acid Salt>

A 20 mL screw tube was charged with 0.025 g of a polyuronic acid salt and 4.975 g of ion-exchanged water, and the contents in the tube were shaken to dissolve the polyuronic acid salt therein. The resulting solution was visually observed to confirm whether any impurities were present in the solution.

<Evaluation of Biodegradability>

A 3 L beaker was charged with 50 mg-carbon/L of the polymer (about 100 mg/L) and 200 mg/L of a sludge from treatment facility. While air-bubbling and stirring the contents in the beaker, the resulting mixture was tested at 25±1°C. Twenty eight days after initiation of the test, the resulting liquid was sampled and filtered through a 0.2 μm filter to measure a dissolved organic carbon concentration (DOC) therein.
The biodegradation rate of the polymer was determined from the ratio of the measured DOC to that measured upon initiation of the test.

PRODUCTION EXAMPLE 1-1 (Production of Amorphized Powdery Cellulose)

A wood pulp sheet (pulp sheet available from Borregaard Inc.; crystallinity: 74%) was cut into chips using a shredder "MSX2000-IVP440F" available from Meikoshokai Co., Ltd.
Then, the thus obtained pulp chips were charged into a twin-screw extruder ("EA-20" available from Suehiro EPA Corporation) equipped with a kneading disk section at a central portion of each screw thereof, at a feed rate of 2 kg/h and passed through the extruder one time at shear rate of 660 $sec^{-1}$ and a screw rotating speed of 300 rpm while flowing a cooling water from outside therethrough to obtain a powder.
Next, 100 g of the thus obtained powdery cellulose were charged into a batch-type media-stirring ball mill "ATTRITOR" available from Mitsui Mining Co., Ltd., (container capacity: 800 mL; filled with 1400 g of 6 mmϕ steel balls; diameter of agitation blade: 65 mm). While flowing a cooling water through a jacket of the container, the powdery cellulose was pulverized at a stirring speed of 600 rpm for 3 h, thereby obtaining a powdery cellulose (crystallinity: 0%; polymerization degree: 490; average particle size: 40 μm). In the above reaction of the powdery cellulose, there were used undersize particles thereof (90% of the raw material charged) obtained by further passing the powdery cellulose through a 32 μm-mesh sieve.

PRODUCTION EXAMPLES I-2 TO I-5

The same procedure as in Production Example I-1 was repeated except for varying the treating time in the ball mill treatment, thereby producing powdery celluloses which were different in crystallinity or polymerization degree from each other (Production Example I-2: crystallinity: 0%, polymerization degree: 62; Production Example I-3: crystallinity: 0%, polymerization degree: 31; Production Example I-4: crystallinity: 2%, polymerization degree: 570; Production Example I-5: crystallinity: 32%, polymerization degree: 340).

EXAMPLE I-1

A 500 mL separable flask equipped with a pH meter was charged with 5 g of the amorphized cellulose powder (polymerization degree: 490) obtained in Production Example I-1 and 95 g of ion-exchanged water, and the contents in the flask were stirred by a foot ball-shaped stirrer at 200 rpm to disperse the amorphized cellulose powder therein. An aqueous solution prepared by dissolving 0.095 g of 2,2,6,6-tetramethyl pyridine-1-oxyl (TEMPO) and 1.25 g of sodium bromide in 150 g of ion-exchanged water was added to the obtained amorphized cellulose dispersion, and the resulting dispersion was continuously stirred with ice cooling. At the time at which the temperature of the reaction solution was dropped to 5°C or lower, 15 g of a sodium hypochlorite aqueous solution were charged into the amorphized cellulose dispersion.
With the progress of the oxidation reaction, the pH value of the reaction system was decreased. In order to maintain the pH value of the amorphized cellulose dispersion near 10.8, 0.5N NaOH (61.7 mL) was gradually added thereto using a microtube pump. Further, 40 g of a sodium hypochlorite aqueous solution were added to the dispersion over 1 h, and 0.5N NaOH was continuously added thereto to adjust the pH value near 10.8. As a result, it was confirmed that after completion of adding whole amounts of the sodium hypochlorite aqueous solution and 0.5N NaOH, substantially a whole amount of the amorphized cellulose dispersion was dissolved in water.
The reaction solution obtained after completion of the reaction was poured into 3 L of ethanol to precipitate sodium polyuronate. The resulting precipitate was recovered and washed with a mixed solvent containing acetone and water at a volume ratio of 7/1, and further washed with acetone and then dried at 40°C, thereby obtaining 6 g of slightly yellow

sodium polyuronate. As a result, it was confirmed that the thus obtained sodium polyuronate had a biodegradation rate of 94%. The results are shown in Table 1.

EXAMPLES 1-2 TO I-4

The same procedure as in Example I-1 was repeated except for using the low-crystalline powdery celluloses obtained in Production Examples I-2 to I-4 (Example I-2: polymerization degree: 62; Example I-3: polymerization degree: 31; Example I-4: polymerization degree: 570), thereby producing sodium polyuronates. The results are shown in Table 1.

COMPARATIVE EXAMPLE I-1

The same procedure as in Example I-1 was repeated except for using the powdery cellulose having a crystallinity of 32% obtained in Production Example 1-5, thereby producing sodium polyuronate. The results are shown in Table 1. As a result of subjecting the resulting sodium polyuronate to water solubility test, it was confirmed that water-insoluble components were contained therein. In addition, as a result of subjecting solid components obtained by filtering the obtained reaction product through a membrane filter (0.45 μm) to measurement of a weight-average molecular weight thereof by GPC, it was confirmed that the weight-average molecular weight was 72,600 (in terms of pullulan). The results are shown in Table 1.

COMPARATIVE EXAMPLE I-2

The same procedure as in Example I-1 was repeated except for using a crystalline powdery cellulose (tradename "KC FLOCK W-400G" available from Nippon Paper Chemicals Co., Ltd.), thereby producing sodium polyuronate. As a result of subjecting the resulting sodium polyuronate to water solubility test, it was confirmed that water-insoluble components were contained therein in a large amount, and it was not possible to measure a molecular weight thereof by GPC. The results are shown in Table 1

TABLE 1-1

| | Raw cellulose material | | |
|---|---|---|---|
| | Crystallinity (%) | Viscosity-average molecular weight | Polymerization degree |
| Example I-1 | 0 | 80,000 | 490 |
| Example I-2 | 0 | 10,000 | 62 |
| Example I-3 | 0 | 5,000 | 31 |
| Example I-4 | 2 | 93,000 | 570 |
| Comparative Example I-1 | 32 | 56,000 | 340 |
| Comparative Example I-2 | 70 | 110,000 | 680 |

TABLE 1-2

| | Sodium polyuronate | | |
|---|---|---|---|
| | m/n*1 | Weight-average molecular weight (in terms of pullulan) | Solubility in water*3 |
| Example I-1 | 89/11 | 73,600 | Dissolved to form a transparent solution |
| Example I-2 | 90/10 | 16,800 | Dissolved to form a transparent solution |
| Example I-3 | 88/12 | 9,100 | Dissolved to form a transparent solution |
| Example I-4 | 85/15 | 54,500 | Dissolved to form a transparent solution |

(continued)

| | Sodium polyuronate | | |
|---|---|---|---|
| | m/n*1 | Weight-average molecular weight (in terms of pullulan) | Solubility in water*3 |
| Comparative Example I-1 | 74/26 | 72,600 | Insoluble components were present |
| Comparative Example I-2 | 60/40 | -*2 | Insoluble components were present |
| Note *1: Ratio of molar fraction of uronic acid salt units (m) to molar fraction of sugar units (n)<br>*2: Unmeasurable<br>*3: Polyuronic acid concentration: 0.5% by mass | | | |

From the results of Table 1, it was confirmed that in Examples I-1 to I-4, the selective oxidation reaction proceeded smoothly, and the polyuronic acid salt having a high water solubility was produced in an efficient manner with a less burden on the environments, as compared to Comparative Examples I-1 and I-2.

PRODUCTION EXAMPLE II-1 (Production of Non-Crystalline Cellulose Powder)

A wood pulp sheet (pulp sheet available from Borregaard Inc.; crystallinity: 74%) was cut into chips using a shredder "MSX2000-IVP440F" available from Meikoshokai Co., Ltd.
Then, the thus obtained pulp chips were charged into a twin-screw extruder ("EA-20" available from Suehiro EPM Corporation) equipped with a kneading disk section at a central portion of each screw thereof, at a feed rate of 2 kg/h and passed through the extruder one time at shear rate of 660 $sec^{-1}$ and a screw rotating speed of 300 rpm while flowing a cooling water from outside therethrough to obtain a powder.
Next, 100 g of the thus obtained powdery cellulose were charged into a batch-type media-stirring ball mill "ATTRITOR" available from Mitsui Mining Co., Ltd., (container capacity: 800 mL; filled with 1400 g of 6 mmφ steel balls; diameter of agitation blade: 65 mm). While flowing a cooling water through a jacket of the container, the powdery cellulose was pulverized at a stirring speed of 600 rpm for 3 h, thereby obtaining a powdery cellulose (crystallinity: 0%; polymerization degree: 600; average particle size: 40 μm). In the above reaction of the powdery cellulose, there were used undersize particles thereof (90% of the raw material charged) obtained by further passing the powdery cellulose through a 32 μm-mesh sieve.

PRODUCTION EXAMPLES II-2 AND II-3 (Production of Non-Crystalline Cellulose Powder)

The same procedure as in Production Example II-1 was repeated except for varying the treating time in the ball mill treatment, thereby producing non-crystalline powdery celluloses which were different in polymerization degree, etc., from each other (Production Example II-2: crystallinity: 0%, polymerization degree: 62; Production Example II-3: crystallinity: 0%, polymerization degree: 31).

EXAMPLE II-1

A 500 mL separable flask equipped with a pH meter was charged with 5 g of the amorphized cellulose powder (polymerization degree: 600) and 95 g of ion-exchanged water, and the contents in the flask were stirred by a foot ball-shaped stirrer at 200 rpm to disperse the amorphized cellulose powder therein. An aqueous solution prepared by dissolving 0.095 g of 2,2,6,6-tetramethyl-1-piperidine-N-oxyl (TEMPO) and 1.25 g of sodium bromide in 150 g of ion-exchanged water was added to the obtained amorphized cellulose dispersion, and the resulting dispersion was continuously stirred with ice cooling. At the time at which the temperature of the reaction solution was dropped to 5°C or lower, 15 g of a sodium hypochlorite aqueous solution was charged into the amorphized cellulose dispersion.
With the progress of the oxidation reaction, the pH value of the reaction system was decreased. In order to maintain the pH value of the amorphized cellulose dispersion near 10.8, 0.5N NaOH (61.7 mL) was gradually added thereto using a microtube pump. Further, 40 g of a sodium hypochlorite aqueous solution were added to the dispersion over 1 h, and 0.5N NaOH was continuously added thereto to suitably adjust the pH value. As a result, it was confirmed that after completion of adding whole amounts of the sodium hypochlorite aqueous solution and 0.5N NaOH, substantially a whole amount of the amorphized cellulose dispersion was dissolved in water.
The reaction solution obtained after completion of the reaction was poured into 3 L of ethanol to precipitate sodium polyuronate. The resulting precipitate was filtered and washed with a mixed solvent containing acetone and water at a volume ratio of 7/1, and further washed with acetone and then dried at 40°C, thereby obtaining 6 g of slightly yellow

sodium polyuronate.
As a result, it was confirmed that the thus obtained sodium polyuronate had a biodegradation rate of 94%.

EXAMPLES II-2 AND II-3

The same procedure as in Example II-1 was repeated except for using the respective amorphized celluloses obtained in Production Examples II-2 and II-3 (Example II-2: polymerization degree: 62; Example II-3: polymerization degree: 31), thereby producing sodium polyuronates.

EXAMPLE II-4

A 500 mL separable flask equipped with a pH meter was charged with 5 g of corn starch (available from Wako Pure Chemical Industries, Ltd.) and 95 g of ion-exchanged water, and the contents in the flask were stirred by a foot ball-shaped stirrer at 200 rpm to disperse the corn starch powder therein. An aqueous solution prepared by dissolving 0.095 g of 2,2,6,6-tetramethyl-1-piperidine-N-oxyl (TEMPO) and 1.25 g of sodium bromide in 150 g of ion-exchanged water was added to the obtained corn starch dispersion, and the resulting dispersion was continuously stirred with ice cooling. At the time at which the temperature of the reaction solution was dropped to 5°C or lower, 15 g of a sodium hypochlorite aqueous solution was charged into the corn starch dispersion.
With the progress of the oxidation reaction, the pH value of the reaction system was decreased. In order to maintain the pH value of the corn starch dispersion near 10.8, 0.5N NaOH (43.2 mL) was gradually added thereto using a microtube pump. Further, 23.5 g of a sodium hypochlorite aqueous solution were added to the dispersion over 1 h, and 0.5N NaOH was continuously added thereto to suitably adjust the pH value. As a result, it was confirmed that after completion of adding whole amounts of the sodium hypochlorite aqueous solution and 0.5N NaOH, substantially a whole amount of the corn starch dispersion was dissolved in water.
The reaction solution obtained after completion of the reaction was poured into 3 L of ethanol to precipitate sodium polyuronate. The resulting precipitate was filtered and washed with a mixed solvent containing acetone and water at a volume ratio of 7/1, and further washed with acetone and then dried at 40°C, thereby obtaining 6 g of slightly yellow sodium polyuronate.
As a result, it was confirmed that the thus obtained sodium polyuronate had a biodegradation rate of 98%.

EXAMPLE II-5

The same procedure as in Example II-4 was repeated except for using a guar gum (tradename "FIBALON S" available from Dainippon Sumitomo Pharma Co., Ltd.) as the polysaccharide raw material, thereby producing sodium polyuronate.

COMPARATIVE EXAMPLE II-1

Sodium alginate as a commercial product available from Wako Pure Chemical Industries, Ltd., was used.

COMPARATIVE EXAMPLE II-2

The same procedure as in Example II-4 was repeated except for using dextran (available from Wako Pure Chemical Industries, Ltd.) as the polysaccharide raw material to oxidize the dextran. However, the pH value of the reaction solution was not reduced by the initial addition of sodium hypochlorite so that the oxidation reaction did not proceed. Therefore, subsequent dropping of sodium hypochlorite was terminated.

COMPARATIVE EXAMPLE II-3

A commercially available sodium carboxymethyl cellulose (CMC; tradename "SUNROSE (registered trademark) APP-84" available from Nippon Paper Chemicals Co., Ltd.) was used as such. As a result, it was confirmed that the CMC had a biodegradation rate of 74%.
The sodium polyuronates obtained in Examples II-1 to II-5 and Comparative Example II-2, the sodium alginate used in Comparative Example II-1 and the CMC used in Comparative Example II-3 were evaluated by their detergency for mud stains by the following method, and the rates of increase in detergency (washing efficiency) (%) thereof were calculated. The results are shown in Table 2.

<Method for Evaluation of Mud Detergency>

The following detergents were prepared, and subjected to detergency test for mud-stained cloth by the following method. The rates of increase in detergency of the detergents in which the respective polymers obtained in Examples II-1 to II-5 and Comparative Examples II-1 to II-3 were compounded relative to that of a detergent in which no polymer was compounded, are shown in Table 2.

(Composition of Detergent)

Sodium polyoxyethylene (P = 2.5) alkyl (C12 to C14) ethersulfate: 25%
Polyoxyethylene (P = 7) alkyl (C12 to C14) ether: 15%
Polymer such as sodium polyuronate: 6%
Water: balance

(Detergency Test for Mud-Stained Cloth)

The following five mud-stained clothes (artificially stained clothes) each having a surface area size of 10 cm x 10 cm were dipped in 1 L of an aqueous detergent solution, and washed in a stirring type detergency tester ("Tergot-O-Meter" available from Ueshima Seisakusho Co., Ltd.) under the following conditions.

·Mud-Stained Cloth (artificially stained cloth)

Kanuma horticultural tuff loam balls were dried at a temperature of 120±5°C for 4 h, and then pulverized. The resulting particles were passed through a 150 mesh (100 μm) sieve, and the resulting undersize particles were further dried at a temperature of 120±5°C for 2 h. Then, ±150 g of the dried particles were dispersed in 1000 L of Perclene to prepare a dispersion. A shirting #2023 cloth was contacted with the resulting dispersion, and brushed to remove the dispersion therefrom, and then an excess amount of mud attached onto the surface of the cloth was removed to obtain a stained cloth to be evaluated. As a result of observing the resulting mud-stained cloth by a microscope, a number of mud particles attached to fibers of the cloth in an embedded state were recognized, i.e., it was confirmed that the cloth was kept near the stained condition encountered in ordinary life.

· Washing Conditions

Rotating speed: 100 rpm; Washing time: 10 min; Washing detergent concentration: 0.133%; Hardness of water: 4° DH; Water temperature: 20°C; Rinsing: 5 min with tap water
The detergency of the detergent was determined as follows. That is, reflectance values of the original cloth before stained and the stained cloth were measured by a self-recording colorimeter (available from Shimadzu Corporation) to calculate a detergency (%) (average of measured values of 5 stained clothes) and a rate of increase in detergency (%) according to the following equations.
Detergency (%) = [(reflectance after washing) - (reflectance before washing)]/[(reflectance of original cloth) - (reflectance before washing)] x 100

Rate of increase in detergency (%) = [(detergency upon addition of polymer) - (detergency upon no addition of polymer)]/(detergency upon no addition of polymer) x 100

TABLE 2-1

| | Polysaccharide as raw material | Polymerization degree | Weight-average molecular weight |
|---|---|---|---|
| Example TI-1 | Amorphized cellulose | 600 | 73,600 |
| Example II-2 | Amorphized cellulose | 62 | 16,800 |
| Example II-3 | Amorphized cellulose | 31 | 9,100 |
| Example II-4 | Corn starch | -*2 | 29,700 |
| Example II-5 | Guar gum | 150 | 26,700 |
| Comparative Example II-1 | Alginic acid | - | 786,000 |
| Comparative Example II-2 | Dextran | 460 | 12,900 |
| Comparative Example II-3 | CMC*1 | - | 87,500 |

TABLE 2-2

| | Oxidation degree (%) | Rate of increase in detergency for mud stains (%) |
|---|---|---|
| Example II-1 | 89 | 21.9 |
| Example II-2 | 90 | 25.3 |
| Example II-3 | 88 | 27.4 |
| Example II-4 | 67 | 15.2 |
| Example II-5 | 97 | 20.5 |
| Comparative Example II-1 | 94 | -9.5 |
| Comparative Example II-2 | 0 | 8.6 |
| Comparative Example II-3 | 59*3 | 9.8 |

Note *1: CMC "APP-84" available from Nippon Paper Chemicals Co., Ltd., was used as such.
*2: Unmeasurable
*3: Carboxymethylation degree

From the results shown in Table 2, it was confirmed that the polyuronic acid salts obtained in Examples were excellent in detergency for mud stains as a builder as compared to those obtained in Comparative Examples.

INDUSTRIAL APPLICABILITY

The present invention provides a process for producing a water-soluble polyuronic acid salt having a good biodegradability in an efficient manner with a less burden on the environments.
Also, according to the present invention, there are provided a polymer builder having not only a good biodegradability but also an excellent detergency for mud stains, and a detergent composition containing the polymer builder.

## Claims

1. A process for producing a polyuronic acid salt, comprising the step of oxidizing a low-crystalline powdery cellulose having a crystallinity of 30% or less.

2. The process for producing a polyuronic acid salt according to claim 1, wherein the low-crystalline powdery cellulose is obtained by treating a cellulose-containing raw material by a mill.

3. The process for producing a polyuronic acid salt according to claim 2, wherein the cellulose-containing raw material

is a material treated by an extruder.

**4.** The process for producing a polyuronic acid salt according to claim 3, wherein the extruder is a twin-screw extruder.

**5.** The process for producing a polyuronic acid salt according to any one of claims 2 to 4, wherein the mill is a media type mill.

**6.** The process for producing a polyuronic acid salt according to claim 5, wherein the media type mill is a container driving type mill or a media stirring type mill.

**7.** The process for producing a polyuronic acid salt according to any one of claims 1 to 6, wherein in the oxidizing step, the low-crystalline powdery cellulose is subjected to oxidation reaction in the presence of an N-oxyl compound.

**8.** The process for producing a polyuronic acid salt according to any one of claims 1 to 7, wherein the oxidation reaction is carried out by dispersing the low-crystalline powdery cellulose in an aqueous system.

**9.** A polymer builder comprising a polyuronic acid salt having a weight-average molecular weight of from 6,000 to 180,000 which is obtained by oxidizing a low-crystalline powdery cellulose having a crystallinity of 30% or less.

**10.** A polymer builder comprising a Polyuronic acid salt having a weight-average molecular weight of from 6,000 to 180,000 which is obtained by oxidizing a polysaccharide.

**11.** The polymer builder according to claim 9 or 10, wherein the polyuronic acid salt has a degree of oxidation of 60 mol% or more.

**12.** The polymer builder according to any one of claims 9 to 11, wherein the polyuronic acid salt is obtained by oxidizing the low-crystalline powdery cellulose or the polysaccharide in the presence of an N-oxyl compound.

**13.** The polymer builder according to any one of claims 9 to 12, wherein the polysaccharide is at least one polysaccharide selected from the group consisting of starch, amylose, amylopectin, pullulan, cellulose and guar gum.

**14.** A detergent composition comprising the polymer builder as defined in any one of claims 9 to 13.

**15.** A use of a polyuronic acid salt having a weight-average molecular weight of from 6,000 to 180,000 which is obtained by oxidizing a polysaccharide, for polymer builders.

**INTERNATIONAL SEARCH REPORT**

International application No.
PCT/JP2009/055768

A. CLASSIFICATION OF SUBJECT MATTER
*C08B15/04*(2006.01)i, *C11D3/22*(2006.01)i, *C11D3/37*(2006.01)i

According to International Patent Classification (IPC) or to both national classification and IPC

B. FIELDS SEARCHED

Minimum documentation searched (classification system followed by classification symbols)
C08B15/04, C11D3/22, C11D3/37

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2005-015680 A (Toppan Printing Co., Ltd.), 20 January, 2005 (20.01.05), Claim 1; Par. Nos. [0021] to [0027], [0050] (Family: none) | 1,7,8<br>2-6,9-15 |
| Y | JP 62-236801 A (Asahi Chemical Industry Co., Ltd.), 16 October, 1987 (16.10.87), Page 1; page 3, table 1 (Family: none) | 2-6,9-15 |
| Y | JP 2003-064184 A (Toray Industries, Inc.), 05 March, 2003 (05.03.03), Par. Nos. [0011] to [0015], [0031] to [0033] (Family: none) | 2-6,9-15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>15 June, 2009 (15.06.09) | Date of mailing of the international search report<br>30 June, 2009 (30.06.09) |
| Name and mailing address of the ISA/<br>Japanese Patent Office<br>Facsimile No. | Authorized officer<br><br>Telephone No. |

Form PCT/ISA/210 (second sheet) (April 2007)

INTERNATIONAL SEARCH REPORT

International application No.
PCT/JP2009/055768

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2004-331918 A (Asahi Kasei Chemicals Corp.), 25 November, 2004 (25.11.04), Par. Nos. [0013], [0023] to [0024] (Family: none) | 2-6,9-15 |
| Y | Akira ISOGAI, Cellulose no Kagaku, Asakura Publishing Co., Ltd., 20 April, 2005 (20.04.05), pages 96 to 97 | 2-6,9-15 |
| Y | Takashi KOBAYASHI et al., "KRC-Kneader no Yotorei ni Tsuite", Kurimoto Technical Report, 10 July, 1986 (10.07.86), No.15, pages 103 to 117 | 2-6,9-15 |
| X<br>Y | JP 10-183174 A (Lion Corp.), 14 July, 1998 (14.07.98), Full text; particularly, Claim 1; Par. Nos. [0016] to [0018], [0040] to [0041], [0052] (Family: none) | 10,11,13-15<br>9,12 |
| X<br>Y | JP 10-183178 A (Lion Corp.), 14 July, 1998 (14.07.98), Full text; particularly, Claim 1; Par. Nos. [0005] to [0007], [0024] to [0025] (Family: none) | 10,11,13-15<br>9,12 |
| X<br>Y | JP 10-183175 A (Lion Corp.), 14 July, 1998 (14.07.98), Full text; particularly, Claim 1; Par. Nos. [0012] to [0014], [0032] to [0034] (Family: none) | 10,11,13-15<br>9,12 |
| X<br>Y | JP 08-510494 A (Henkel KGaA), 05 November, 1996 (05.11.96), Full text & US 5959101 A & EP 0703927 A1 & WO 1994/028030 A1 | 10,11,13-15<br>9,12 |
| X<br>Y | JP 2001-510232 A (Instituut Voor Agrotechnologisch Onderzoek), 31 July, 2001 (31.07.01), Full text & EP 0892041 A1 & WO 1999/003961 A1 | 10,11,13-15<br>9,12 |
| X<br>Y | JP 09-508168 A (Henkel KGaA), 19 August, 1997 (19.08.97), Full text & US 5821360 A1 & EP 0742797 A1 & WO 1995/020608 A1 | 10,11,13-15<br>9,12 |
| X<br>Y | JP 08-500626 A (Henkel KGaA), 23 January, 1996 (23.01.96), Full text & EP 0656937 A1 & WO 1994/005762 A1 | 10,11,13-15<br>9,12 |

Form PCT/ISA/210 (continuation of second sheet) (April 2007)

**INTERNATIONAL SEARCH REPORT**

International application No. PCT/JP2009/055768

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 07-503495 A (Henkel KGaA),<br>13 April, 1995 (13.04.95),<br>Full text<br>& US 5541316 A & EP 0625992 A1<br>& WO 1993/016110 A1 | 10,11,13-15<br>9,12 |
| X<br>Y | JP 07-500853 A (Henkel KGaA),<br>23 January, 1995 (23.01.95),<br>Full text<br>& US 5501814 A & EP 0609273 A1<br>& WO 1993/008251 A1 | 10,11,13-15<br>9,12 |
| X<br>Y | JP 51-039755 A (Akzo N.V.),<br>02 April, 1976 (02.04.76),<br>Full text<br>& US 4056400 A & DE 2436843 A1<br>& FR 2280674 A1 | 10,11,13-15<br>9,12 |
| Y | JP 2002-226502 A (Mitsubishi Gas Chemical Co., Inc.),<br>14 August, 2002 (14.08.02),<br>Full text; particularly, Par. Nos. [0010] to [0011], [0014]<br>& US 2002/0143172 A1 | 12 |
| X | JP 08-048999 A (The Nisshin Oil Mills, Ltd.),<br>20 February, 1996 (20.02.96),<br>Full text<br>(Family: none) | 10,11,13-15 |
| P,A | JP 4160108 B1 (Kao Corp.),<br>01 October, 2008 (01.10.08),<br>Full text<br>(Family: none) | 1-9 |
| P,A | JP 4160109 B1 (Kao Corp.),<br>01 October, 2008 (01.10.08),<br>Full text<br>(Family: none) | 1-9 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004189924 A
- JP 2006124598 A
- JP 62104900 A
- JP 9503517 A
- JP 2002047302 A
- JP 2002226502 A
- JP 62236801 A
- JP 2003064184 A
- JP 2004331918 A


### Non-patent literature cited in the description


- Progress of Chemical Engineering; 30th Collection; Control of Microparticles. Maki-Shoten, 10 October 1996